Europäisches Patentamt

**European Patent Office**

Office européen des brevets

(11) Publication number: **0 162 563**
A2

(12) **EUROPEAN PATENT APPLICATION**

(21) Application number: **85302531.0**

(22) Date of filing: **11.04.85**

(51) Int. Cl.⁴: **H 02 J 9/06**

(30) Priority: **12.04.84 GB 8409496**

(43) Date of publication of application:
**27.11.85 Bulletin 85/48**

(84) Designated Contracting States:
**DE FR GB IT SE**

(71) Applicant: **Honeywell Control Systems Ltd.
Honeywell House Charles Square
Bracknell Berkshire(GB)**

(72) Inventor: **Taylor, William Stewart
12 Turnberry Drive Bridge of Weir
Renfrewshire PA11 3HD(GB)**

(74) Representative: **Harman, Michael Godfrey
Honeywell Control Systems Ltd. Patent Department
Charles Square
Bracknell Berkshire RG12 1EB(GB)**

(54) **Back-up power supply system.**

(57) A power supply system has a primary power source S1 which is energized from the mains, and a secondary power source S2 which is a battery and which is to be switched in automatically when the mains power fails, to supply a load L. The two power supplies are connected to the load by means of the emitter-collector paths of two respective transistors Q1 and Q2. The two transistors have a common base resistor R. Whichever power supply produces the higher voltage turns its transistor on and the other off. This circuit involves relatively low voltage drops (compared e.g. to the use of steering diodes), and is therefore suitable for low voltage supplies, e.g. 3 V.

EP 0 162 563 A2

Croydon Printing Company Ltd.

## BACK-UP POWER SUPPLY SYSTEM

The present invention relates to back-up power supply systems, and more generally to circuits for switching between two DC power sources.

The use of back-up power supplies in electronics is well established. Typically there will be a primary power supply which derives its energy from the mains, by means for example of a transformer, rectifying bridge, and smoothing circuit, and there will be a secondary power supply consisting of a battery. These two power supplies have to be coupled to the load in such a way that the load is switched from one to the other when the mains supply fails.

Such switching means present little difficulty in relatively high voltage systems, but known means have significant disadvantages in low voltage systems, where the supply voltage may be as little as 3 V.

One known switching means involves the use of two steering diodes, one for each supply. This arrangement produces a voltage drop which may be unacceptable in low voltage applications. Another known switching means uses a diode in the primary power supply line and a transistor switch in the back-up line. This arrangement requires that sufficient capacitance be provided to hold the supply to the load up to an adequate value while the primary supply drops through the necessary differential voltage to turn on the back-up power switch.

The object of the present invention is to provide an arrangement which overcomes these disadvantages.

Accordingly the present invention provides a switching means, for switching the power supply to a load between two different power sources, comprising a pair of transistors having their emitters connected to the two respective sources, their collectors connected in common to one side of the load, and their bases connected through a common bias resistor to the other side of the load.

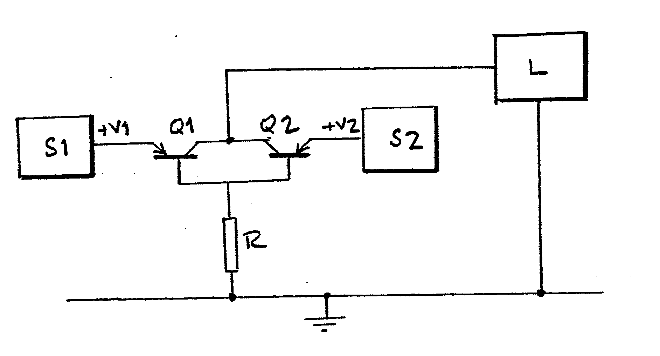

A circuit in accordance with the invention will now be described, by way of example, with reference to the drawing, which is a circuit diagram.

Referring to the drawing, the two power supply sources are S1 and S2, producing output voltages V1 and V2 respectively. These are connected to the emitters of two respective transistors Q1 and Q2, which have their collectors connected in common to the load L. The bases of the transistors are connected to a common bias resistor R.

In operation, bias current flows constantly through resistor R from whichever of the two voltage sources S1 and S2 has the higher voltage, through the emitter-base path of the corresponding transistor. This bias current sets the voltage on the base of the other transistor, causing that transistor to be either reverse biased or insufficiently forward biased to turn on. If the relative magnitudes of the supply voltages are reversed, then the one which is now higher will provide the bias current and so be switched to the load. It will be noted that the circuit is completely symmetrical.

Of course, opposite polarity transistors will be used if a negative supply is required.

This circuit provides a clean, droop-free switching action regardless of supply rise and fall times, with a voltage drop of typically less than 200 mV in low current applications. It also avoids the inverted-transistor battery charging problems which can arise when using primary battery supplies in transistor-switched back-up applications.

## CLAIMS

1. Switching means, for switching the power supply to a load (L) between two different power sources (S1, S2), comprising a pair of transistors (Q1, Q2) having their emitters connected to the two respective sources, their collectors connected in common to one side of the load, and their bases connected through a common resistor (R) to the other side of the load.

0162563